# EUROPÄISCHE PATENTSCHRIFT

(11) **EP 2 771 104 B1**
(45) Veröffentlichungstag und Bekanntmachung des Hinweises auf die Patenterteilung: **01.02.2017**
(21) Anmeldenummer: 12779054.1
(22) Anmeldetag: 26.10.2012
(51) Int. Cl.: B01J 20/00, C08F 20/00, C08F 251/02, A61L 15/28, A61L 15/62, C09K 17/50, A01G 9/02, B01J 20/26, C05G 3/00, C05G 3/04, C09K 17/18, A01G 31/00

(54) **HOCHQUELLFÄHIGE POLYMERISATE**
HIGHLY SWELLABLE POLYMERS
POLYMÉRISATS À CAPACITÉ DE GONFLEMENT ÉLEVÉE

(30) Priorität: 28.10.2011 DE 102011117127
(43) Veröffentlichungstag der Anmeldung: 03.09.2014
(73) Patentinhaber: BASF SE, 67056 Ludwigshafen am Rhein (DE)
(72) Erfinder: DIAMANTOGLOU, Michael, 63906 Erlenbach (DE); HARTMANN, Christoph, 63820 Elsenfeld (DE)
(74) Vertreter: BASF IP Association
(86) Internationale Anmeldenummer: PCT/EP2012/071269
(87) Internationale Veröffentlichungsnummer: WO 2013/060848

(56) Entgegenhaltungen:
- CN-A- 101 519 476
- DE-A1-102005 021 221
- DE-U1-202007 016 362

## Beschreibung

Die vorliegende Erfindung betrifft ein Verfahren zur Herstellung von Polymerisaten, die geeignet sind, wässrige Flüssigkeiten aufzunehmen und zu speichern, sowie die nach diesem Verfahren erhältlichen Polymerisate. Die Erfindung betrifft auch die Verwendung dieser Polymerisate.

Polymerisate, die geeignet sind, ein Vielfaches ihres Eigengewichts an wässrigen Flüssigkeiten aufzunehmen und zu speichern sind bekannt. Für derartige Polymerisate sind Bezeichnungen wie "Superabsorber", "hochquellfähiges Polymerisat", "Hydrogel" (oft auch für die trockene Form verwendet), "Hydrogel bildendes Polymerisat", "Wasser absorbierendes Polymer bzw. Polymerisat", "absorbierendes gelbildendes Material", "quellfähiges Harz", "Wasser absorbierendes Harz", "Wasser absorbierendes Polymer" oder ähnliche gebräuchlich. Es handelt sich dabei um vernetzte hydrophile Polymere, insbesondere Polymere aus (co)polymerisierten hydrophilen Monomeren, Pfropf(co)polymere von einem oder mehreren hydrophilen Monomeren auf einer geeigneten Pfropfgrundlage, vernetzte Cellulose- oder Stärkeether, vernetzte Carboxymethylcellulose, teilweise vernetztes Polyalkylenoxid oder in wässrigen Flüssigkeiten quellbare Naturprodukte, wie beispielsweise Guarderivate, wobei Polymerisate auf Basis teilneutralisierter Acrylsäure am weitesten verbreitet sind. Die wesentlichen Eigenschaften von derartigen Polymerisaten sind ihre Fähigkeiten, ein Vielfaches ihres Eigengewichts an wässrigen Flüssigkeiten zu absorbieren und die Flüssigkeit auch unter gewissem Druck nicht wieder abzugeben. Derartige hochquellfähigen Polymere, die typischerweise in Form eines trockenen Pulvers eingesetzt werden, wandeln sich bei Flüssigkeitsaufnahme in ein Gel, bei der üblichen Wasseraufnahme entsprechend in ein Hydrogel um. Die Vernetzung ist für synthetische hochquellfähigen Polymere bzw. Polymerisate wesentlich und ein wichtiger Unterschied zu üblichen reinen Verdickern, da sie zur Unlöslichkeit der Polymere in Wasser führt.

Fredric L. Buchholz und Andrew T. Graham (Hrsg.) geben in: "Modern Superabsorbent Polymer Technology", J. Wiley & Sons, New York, U.S.A. / Wiley-VCH, Weinheim, Germany, 1997, ISBN 0-471-19411-5, einen zusammenfassenden Überblick über hochquellfähige Polymere, ihre Eigenschaften und Verfahren zur Herstellung von hochquellfähigen Polymeren.

Die hochquellfähigen Polymere der verschiedensten Art haben sich mittlerweile zu einer wirtschaftlich sehr bedeutsamen Produktgruppe entwickelt, und es gibt weltweit enorme Produktionskapazitäten. Neben der derzeit hauptsächlichen Verwendung im Hygienebereich gewinnen aber auch andere Anwendungsgebiete an Bedeutung wie z.B. als Bodenhilfsmittel in der Agrar- und Landwirtschaft sowie im Gartenbau oder als Brandlöschmittelzusatz, um nur einige zu nennen.

Verschiedentlich wird Harnstoff als Zusatz für hochquellfähige Polymere vorgeschlagen.

DE 38 31 261 A1 lehrt die Herstellung von hochquellfähigen Polymeren durch radikalische Polymerisation wenigstens teilweise neutralisierter Acrylsäure in Gegenwart von Vernetzern, wobei zur Erhöhung des Neutralisationsgrades eine stickstoffhaltige, thermisch zersetzbare Verbindung, beispielsweise Harnstoff, während der Superabsorberherstellung vor der Trocknung als Treibmittel zugesetzt wird, um ein lockeres und gut mahlbares Harz zu gewinnen.

WO 2004/018 005 A1 und WO 2004/018 006 A1 nennen Harnstoff als ein mögliches Oberflächennachvernetzungsmittel für hochquellfähige Polymere auf Basis von vernetzten Polyacrylaten.

Die WO 2010/018143 lehrt den Einsatz von Salzen des Harnstoffs bei der Herstellung von hochquellfähigen Polymeren durch radikalische Polymerisation wenigstens teilweise neutralisierter Acrylsäure in Gegenwart von Vernetzern zur Verringerung des Restmonomergehalts.

Die US 2004/0234760 A1 beschreibt die Herstellung von wasserquellbaren Zellulosefasern, bei denen konventionelle Zellulosefasern mit einer wässrigen Lösung eines Carboxylgruppenhaltigen Monomeren und eines Vernetzers imprägniert werden und dann die Monomere zu einem wasserquellbaren Polymerisat auspolymerisiert werden.

WO 2006/119 828 A1 lehrt ein Hybridmaterial aus hochquellfähigen Polymeren auf Basis von vernetzten Polyacrylaten und anorganischen Feststoffteilchen, das als Pflanzensubstrat geeignet ist. Die Herstellung erfolgt durch radikalische Polymerisation wenigstens teilweise neutralisierter Acrylsäure in Gegenwart von Vernetzern. Dabei können dem Hybridmaterial während oder nach der Polymerisation, bestimmte organische Zusatzstoffe, darunter Harnstoff oder Polysaccharide zugegeben werden.

DE 102007056264 beschreibt ein Material zur Verbesserung der Bodenqualität, insbesondere zur Erhöhung des Wasseraufnahme- und Wasserspeichervermögens von Böden, dass als Matrix ein wasserquellbares Polymerisat und in der Matrix verteilte anorganische Feststoffpartikel aufweist, wobei das Polymerisat kohlhydrat-basierte Struktureinheiten aufweist. Die Herstellung des Materials erfolgt durch radikalische Polymerisation eines Gemischs wenigstens teilweise neutralisierter Acrylsäure, Vernetzern, anorganischer Partikel und Kohlehydraten. Ggf. wird während der Polymerisation Harnstoff zugesetzt.

In der DE 10 2005021221 wird ein Superabsorber aus vernetzten Polyacrylaten, die polymergebundene gemahlene Mineralstoffe enthalten, beschrieben.

Die DE 31 28 100 beschreibt ein Absorptionsmittel für Blut und seröse Körperflüssigkeiten, das aus einem vernetzten, wasserquellbaren Polymer oder Copolymer und einer anorganischen oder organischen festen, wasserlöslichen Verbindung besteht.

In der EP 1 996 242 wird eine Zusammensetzung aus einem oberflächennachvernetzten Superabsorber und einer Ketosäure beschrieben. Der verwendete Superabsorber ist ein vernetztes Polymer auf Basis teilneutralisierter Acrylsäure.

Die EP 1 574 522 beschreibt ein Verfahren zur Herstellung von quellfähigen, modifizierten Cellulose- oder Stärkeethern durch Behandlung wasserlöslicher Cellulose- oder Stärkeether mit einem Vernetzungsmittel.

Ein Nachteil der aus dem Stand der Technik bekannten hochquellfähigen Polymerisate auf Basis von Acrylsäure ist vielfach die sehr schlechte oder sogar fehlende biologische Abbaubarkeit und Verrottbarkeit, die insbesondere dann von Bedeutung ist, wenn die hochquellfähigen Polymerisate zur Verbesserung der Bodenqualität, insbesondere zur Verbesserung der Aufnahme und Speicherung von Wasser in Böden eingesetzt werden sollen.

Auch sind die industriellen Anlagen zur Herstellung der aus dem Stand der Technik bekannten hochquellfähigen Polymerisate oft sehr kostenträchtig und erfordern umfangreiche Investitionen in Apparate, Regeltechnik, Energieversorgung, sei es nun zum Kühlen oder Heizen, Rühren usw. Auch ist der Platzbedarf für solche Anlagen meist sehr groß. Auch fallen vielfach hohe Kosten für den Antransport der Ausgangsstoffe an.

Hier besteht also noch ein Bedürfnis nach verbesserten Produkten und nach Verfahren, die besser und vorteilhafter arbeiten und die zu hochquellfähigen Polymerisaten führen, die ein gutes und verbessertes Eigenschaftsprofil aufweisen, welche die Verarbeitung von vielen Stoffen, insbesondere von oft wertlosen Abfallprodukten erlauben und damit auch Entsorgungsprobleme bereits an der Quelle ermöglichen und dann selbst auch noch umweltfreundlich sind und zudem eine bessere Verwertbarkeit und neue Anwendungen bieten.

Die DE 102010047379 beschreibt verrottbare Wasser aufnehmende und Wasser speichernde Polymerisate auf Basis von Acrylsäure, die Abfallstoffe auf Basis von Polysacchariden, insbesondere auf Basis ligninhaltiger Cellulosematerialien, enthalten und die eine gute biologische Abbaubarkeit und eine gute Verrottbarkeit aufweisen. Die Herstellung der Polymerisate erfolgt durch radikalische Polymerisation eines wässrigen Gemischs aus Acrylsäure, Vernetzer, Abfallstoff und Wasser im Sauren, gefolgt von einer Neutralisation des Reaktionsprodukts.

Eine Aufgabe der Erfindung ist daher die Bereitstellung von hochquellfähigen Polymerisaten, die wässrige Flüssigkeiten wie Wasser, Lösungen, Emulsionen und flüssige Dispersionen absorbieren und speichern können, und gleichzeitig verrottbar sind und daher zur Verbesserung der Bodenqualität eingesetzt werden können. Insbesondere sollen die hochquellfähigen Polymerisate eine möglichst hohe Wasseraufnahmekapazität aufweisen und im Boden möglichst weitgehend oder vollständig abgebaut werden.

Eine weitere Aufgabe der Erfindung ist auch die Bereitstellung eines Verfahrens zur Herstellung derartiger Produkte, das einfach und wirtschaftlich durchzuführen ist, das keinen großen apparativen Aufwand benötigt, umweltfreundlich ist, bei dem billige oft nicht ohne großen Aufwand wieder verwertbare Abfall- und Nebenprodukte eingesetzt werden können, und das zuverlässig zu guten und vielseitig verwendbaren Produkten führt.

Diese und weitere Aufgaben werden durch das in den Ansprüchen und hier im Folgenden beschriebene Verfahren sowie durch die dadurch erhältlichen hochquellfähigen Polymerisate gelöst.

Dementsprechend betrifft die Erfindung ein Verfahren zur Herstellung von Polymerisaten, die geeignet sind, wässrige Flüssigkeiten aufzunehmen und zu speichern, welches die folgenden Schritte umfasst:
i. vernetzende radikalische Polymerisation einer Monomerzusammensetzung M, die
   a) wenigstens ein Monomer A, das ausgewählt ist unter monoethylenisch ungesättigten C₃-C₈-Monocarbonsäuren, deren Gemischen und Gemischen wenigstens einer monoethylenisch ungesättigten C₃-C₈-Monocarbonsäure mit ein oder mehreren monoethylenisch ungesättigten C₄-C₈-Dicarbonsäuren,
   b) gegebenenfalls ein oder mehrere, von den Monomeren A verschiedene Comonomere B, die eine ethylenische Doppelbindung aufweisen, und
   c) 0,05 bis 10 Gew.-%, bezogen auf die Gesamtmenge der Monomere A und B, wenigstens eines Vernetzers C
   umfasst, in Gegenwart wenigstens eines feinteiligen, partikelförmigen Cellulosematerials S, das gebundenes Lignin enthält, in einer wässrigen Flüssigkeit, wobei das Gewichtsverhältnis der Monomerzusammensetzung M zu der Substanz S im Bereich von 9 : 1 bis 1 : 9 liegt; und
ii. wenigstens teilweise Neutralisation der Säuregruppen in dem in Schritt i. erhaltenen Polymerisat;
wobei man die Polymerisation und/oder die Neutralisation in Gegenwart von Harnstoff durchführt und wenigstens 90 Gew.-% der Partikel des partikelförmigen Cellulosematerials Abmessungen im Bereich von 1 µm bis < 500 µm, bestimmt durch Siebanalyse, aufweisen.

Das erfindungsgemäße Verfahren liefert zuverlässig und in einfach durchzuführender Weise hochquellfähige Polymerisate, d.h. Polymerisate, die ein Vielfaches ihres Eigengewichts an wässrigen Flüssigkeiten aufnehmen und speichern können. Zudem sind die Materialien leicht verrottbar und werden im Boden weitgehend oder vollständig abgebaut.

Das erfindungsgemäße Verfahren bedarf keiner aufwändigen Apparaturen und kann auch unter Zutritt von Luftsauerstoff durchgeführt werden. Das erfindungsgemäße Verfahren arbeitet sehr kostengünstig und zuverlässig und erlaubt reproduzierbar die Herstellung von Superabsorbern mit vorteilhaftem Eigenschaftsprofil. Ein besonders großer Vorteil besteht darin, dass der apparative Aufwand sehr gering ist da weder Wärme abgeführt werden muss noch unter Schutzgasatmosphäre gearbeitet werden muss. Rühren der Reaktionsmasse während der Polymerisation ist ebenfalls nicht erforderlich. Die Polymerisation läuft ausgesprochen kontrolliert ab. Im Prinzip braucht man zur Durchführung des Verfahrens lediglich ein beheizbares Reaktionsgefäß mit Deckel. Das erfindungsgemäße Verfahren lässt sich deshalb auch in Kleinbetrieben mit einfachen Mitteln durchführen.

Ein weiterer Vorteil ist, dass das Produkt beim Trocknen z.B. in einem Schaufeltrockner unmittelbar als rieselfähiges Produkt anfällt.

Besonders vorteilhaft ist die Möglichkeit, Abfallstoffe und Nebenprodukte einzusetzen, die bei der Verarbeitung von polysaccharidhaltigen Materialien anfallen. Diese können ohne Probleme direkt an Ort und Stelle, wo sie anfallen, verarbeitet werden. Dadurch entfällt eine Entsorgung der Abfallstoffe und Nebenprodukte, die erfindungsgemäß erhaltenen Polymerisate sind sehr umweltfreundlich.

Beim Einsatz als Bodenverbesserer verrotten die Polymerisate im Laufe der Zeit, bleiben aber doch solange funktionsfähig, dass sie Ihre Aufgabe z.B. als Wasserspeicher ein paar Jahre erfüllen können. Dies gilt auch, wenn sie gefüllt mit Düngemitteln oder Pflanzenschutzmittel u.dgl. zum Einsatz gelangen. Insoweit sind sie auch für die kontrollierte Abgabe von Wasser und Wirkstoffen sehr geeignet.

Gegenstand der Erfindung sind auch die nach dem erfindungsgemäßen Verfahren erhältlichen Polymerisate.

In dem ersten Schritt des erfindungsgemäßen Verfahrens wird eine vernetzende radikalische Polymerisation einer Monomerzusammensetzung M in Gegenwart wenigstens einer Cellulose enthaltenden Substanz S durchgeführt.

Die Monomerzusammensetzung M enthält ein oder mehrere Monomere A, die eine polymerisierbare ethylenische Doppelbindung und wenigstens eine neutralisierbare Säuregruppe oder wenigstens eine zu einer neutralisierbaren Säuregruppe hydrolysierbare Gruppe aufweisen.

Die Säuregruppe der Monomere A kann beispielsweise eine Carboxyl-, Sulfonsäure- oder Phosphonsäuregruppe sein. Hydrolysierbare Gruppen sind vor allem Nitrilgruppen, Carboxamidgruppen und Carbonsäureanhydridgruppen.

In der Regel sind die Monomere A wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser.

Bevorzugte Monomere A weisen wenigstens eine, insbesondere eine oder zwei neutralisierbare Säuregruppen auf. Bevorzugt ist die wenigstens eine neutralisierbare Säuregruppe der Monomere A eine oder zwei Carboxylgruppen. Besonders bevorzugte Monomere A weisen eine Carboxylgruppe und eine ethylenische Doppelbindung auf.

Geeignete Monomere A sind insbesondere
- monoethylenisch ungesättigte Monoarbonsäuren mit 3 bis 8 C-Atomen, im Folgenden monoethylenisch ungesättigte C₃-C₈-Monocarbonsäuren, wie beispielsweise Acrylsäure, Methacrylsäure und Ethacrylsäure, und deren Gemische;
- Gemische wenigstens einer monoethylenisch ungesättigten C₃-C₈-Monocarbonsäure mit ein oder mehreren monoethylenisch ungesättigten Diarbonsäuren mit 4 bis 8 C-Atomen, im Folgenden monoethylenisch ungesättigten C₄-C₈-Dicarbonsäuren, wie Maleinsäure, Fumarsäure und Itaconsäure, und deren Gemische.

Bevorzugte Monomere A sind ausgewählt unter monoethylenisch ungesättigten C₃-C₈-Monocarbonsäuren, insbesondere unter Acrylsäure und Methacrylsäure, deren Gemischen und Gemischen wenigstens einer monoethylenisch ungesättigten C₃-C₈-Monocarbonsäure wie Acrylsäure oder Methacrylsäure mit ein oder mehreren monoethylenisch ungesättigten C₄-C₈-Dicarbonsäuren wie Itaconsäure.

Insbesondere sind die Monomere A ausgewählt unter monoethylenisch ungesättigten C₃-C₈-Monocarbonsäuren, speziell unter Acrylsäure und Methacrylsäure.

Der Anteil an Acrylsäure an der Gesamtmenge der Monomeren A beträgt insbesondere mindestens 50 mol-%, besonders bevorzugt mindestens 90 mol-%, ganz besonders bevorzugt mindestens 95 mol-%.

Neben den Monomeren A kann die Monomerzusammensetzung, von den Monomeren A verschiedene monoethylenisch ungesättigte Monomere umfassen, die mit den Monomeren A copolymerisierbar sind (Comonomere B).

In der Regel sind die Monomere A wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser.

Geeignete Comonomere B sind beispielsweise Acrylamid, Methacrylamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminoethylmethacrylat und Diethylaminoethylmethacrylat.

Die Comonomere B machen in der Regel nicht mehr als 49,95 Gew.-%, insbesondere nicht mehr als 19,9 Gew.-% und speziell nicht mehr als 9,8 Gew.-%, bezogen auf das Gesamtgewicht der Monomerzusammensetzung, d.h. bezogen auf die Gesamtmenge an Monomer A + Comonomer B + Vernetzer C aus. Dementsprechend beträgt der Anteil der Monomere A in der Regel wenigstens 50 Gew.-%, insbesondere wenigstens 80 Gew.-% und speziell wenigstens 90 Gew.-%, bezogen auf das Gesamtgewicht der Monomerzusammensetzung, d.h. bezogen auf die Gesamtmenge an Monomer A + Comonomer B+ Vernetzer C. In einer speziellen Ausführungsform umfasst die Monomerzusammensetzung kein Comonomer B oder weniger als 1 Gew.-% Comonomere B, bezogen auf das Gesamtgewicht der Monomerzusammensetzung, d.h. bezogen auf die Gesamtmenge an Monomer A + Comonomer B + Vernetzer C.

Neben den Monomeren A und dem gegebenenfalls vorhandenen Comonomer B umfasst die Monomerzusammensetzung 0,05 bis 10 Gew.-% oder 0,1 bis 10 Gew.-%, häufig 0,05 bis 1,5 Gew.-% oder 0,1 bis 1,5 Gew.-%, insbesondere 0,1 bis 1 Gew.-% und speziell 0,2 bis 0,8 Gew.-%, bezogen auf die Gesamtmenge an Monomer A und dem gegebenenfalls vorhandenen Comonomer B, eines oder mehrerer Vernetzer C.

Als Vernetzer lassen sich grundsätzlich alle Substanzen verwenden, die entweder mindestens zwei ethylenisch ungesättigte Gruppen oder mindestens eine ethylenische Doppelbindung und mindestens eine mit Säuregruppen reagierende funktionelle Gruppe oder mindesten zwei mit Säuregruppen reagierende funktionelle Gruppen enthalten. Die Reaktion der Funktionalität kann die Ausbildung einer kovalenten Bindung oder einer koordinativen Bindung beinhalten.

Vernetzer C sind vorzugsweise Verbindungen mit mindestens zwei polymerisierbaren Gruppen, die in das Polymernetzwerk radikalisch einpolymerisiert werden können. Geeignete Vernetzer C sind beispielsweise Ethylenglykoldimethacrylat, Diethylenglykoldiacrylat, Polyethylenglykoldiacrylat, Allylmethacrylat, Trimethylolpropantriacrylat, Tetraallyloxyethan, wie in EP 530 438 A1 beschrieben, Di- und Triacrylate, wie in EP 547 847 A1, EP 559 476 A1, EP 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, Methylenbisacrylamid, Methylenbismethacrylamid, oder Vernetzermischungen, wie beispielsweise in DE 195 43 368 A1, DE 196 46 484 A1, WO 90/15830 A1 und WO 2002/32962 A2 beschrieben. Ferner können verwendet werden u.a. Diallylacrylamid, Triallylcitrat, Allylether von Di- und Polyolen und deren Oxyethylaten und Allylether von Aminen und deren Salze, die mindestens zwei ethylenische Doppelbindungen aufweisen wie z.B. Triallylamin und Tetraallylammoniumchlorid.

Bevorzugte Vernetzer C sind Pentaerythrittriallylether, Tetraallyloxiethan, Methylenbisacrylamid, Methylenbismethacrylamid, 10 bis 20-fach ethoxyliertes Trimethylolpropantriacrylat, 10 bis 20-fach ethoxyliertes Trimethylolethantriacrylat, besonders bevorzugt 15-fach ethoxiliertes Trimethylolpropantriacrylat, Polyethylenglykoldiacrylate mit 4 bis 30 Ethylenoxideinheiten in der Polyethylenglykolkette , Trimethylolpropantriacrylat, Di- und Triacrylate des 3 bis 30-fach ethoxylierten Glycerins, besonders bevorzugt Di- und Triacrylate des 10-20-fach ethoxylierten Glycerins, und Triallylamin. Die nicht vollständig mit Acrylsäure veresterten Polyole können hier auch als Michaeladdukte mit sich selbst vorliegen, wodurch auch tetra-, penta- oder noch höhere Acrylate vorliegen können. In einer besonders bevorzugten Ausführungsform der Erfindung wird als Vernetzer C Methylenbisacrylamid eingesetzt.

Neben dem Monomer A, dem gegebenenfalls vorhandenen Comonomer B und dem Vernetzer C umfasst die Monomerzusammensetzung typischerweise keine oder nicht mehr als 1 Gew.-% ethylenisch ungesättigte Verbindungen, die von dem Monomer A, dem gegebenenfalls vorhandenen Comonomer B und dem Vernetzer C verschieden sind. Mit anderen Worten: das Monomer A, das gegebenenfalls vorhandene Comonomer B und der Vernetzer C bilden in der Polymerisation das Polymerisat.

Erfindungsgemäß erfolgt die Polymerisation der Monomerzusammensetzung in Gegenwart wenigstens eines feinteiligen, partikelförmigen Cellulosematerials S, das gebundenes Lignin enthält.

Das feinteilige, partikelförmige Cellulosematerial S wird typischerweise in einer Menge eingesetzt, dass das Gewichtsverhältnis von Substanz S zu der Monomerzusammensetzung M, d.h. zur Gesamtmenge an Monomer A + gegebenenfalls vorliegendem Comonomer B + Vernetzer C, im Bereich von 1 : 9 bis 9 : 1 , vorzugsweise im Bereich von 2 : 8 bis 8 : 2, insbesondere im Bereich von 7 : 3 bis 3 : 7 liegt. Auf diese Weise wird ein ausgewogenes Verhältnis an Wasseraufnahmekapazität und Verrottbarkeit/Bioabbaubarkeit im Boden erzielt. Man nimmt an, dass unter den Polymerisationsbedingungen eine besonderes effiziente Pfropfung des aus den Monomeren A, den gegebenenfalls eingesetzten Comonomeren B und dem Vernetzer C gebildeten Polymerisats auf die Polysaccharid-Ketten der Substanz S erreicht wird.

Als Substanz S können Polysaccharide, polysacharidhaltige Stoffe und Polysaccharidderivate der verschiedensten Provenienzen verwendet werden. Hierzu zählen reine Naturstoffe und Naturstoffederivate wie Cellulose, Carboxymethylcellulose, Hydroxyethylcellulose, Celluloseether, Stärke, Stärkeether, Guar, Chitin, Chitosan, Natriumalginat usw.

Bevorzugte Substanzen S sind in Wasser nicht löslich, d.h. die Wasserlöslichkeit liegt unterhalb 1 g pro Liter bei 20°C.

Die Substanz S wird in Form eines feinteiligen, partikelförmigen Materials eingesetzt. Unter feinteilig versteht man, dass die Partikel des Materials Teilchenabmessungen unterhalb 500 µm, insbesondere unterhalb 300 µm und speziell unterhalb 200 µm aufweisen. Erfindungsgemäß weisen wenigstens 90 Gew.-% der Partikel Abmessungen unterhalb 500 µm, besonders bevorzugt unterhalb 300 µm und ganz besonders bevorzugt unterhalb 200 µm, z.B. im Bereich von 1 bis < 500 µm, insbesondere im Bereich von 5 bis < 300 µm und speziell im Bereich von 10 bis < 200 µm, bestimmt durch Siebanalyse, auf

Erfindungsgemäß verwendete Substanzen S enthalten Cellulose oder Cellulosederivate und werden im Folgenden auch als Cellulosematerialien bezeichnet. Die erfindungsgemäß verwendeten Cellulosematerialien S enthalten gebundenes Lignin und werden auch als Lignocellulosematerialien bezeichnet. Hierzu zählen vor allem Materialien pflanzlichen Ursprungs wie feinteilige Materialien auf Basis von Holz- und Pflanzenteilen sowie industrielle Abfallstoffe, die Cellulose und Lignin enthalten, z.B. Spuckstoffe aus der Zellstoffgewinnung, sowie deren Mischungen mit ligninfreien oder ligninarmen Cellulosematerialien, wobei der Anteil an ligninhaltigen Materialien vorzugsweise wenigstens 50 Gew.-%, insbesondere wenigstens 60 Gew.-%, bezogen auf die Gesamtmasse der Substanz S, ausmacht. In besonders bevorzugten Ausführungsformen der Erfindung machen die ligninhaltigen Materialien wenigstens 90 Gew.-%, bezogen auf die Gesamtmasse der Substanz S, aus.

In besonders bevorzugten Ausführungsformen handelt es sich bei den ligninhaltigen Cellulosematerialien um pflanzliche oder industrielle Abfallstoffe oder Nebenprodukte, die bei der Verarbeitung und Aufarbeitung pflanzlicher Materialien anfallen, oder um deren Mischungen mit ligninfreien oder ligninarmen Cellulosematerialien, wobei der Anteil an Abfallstoffen bzw. Nebenprodukten, vorzugsweise wenigstens 50 Gew.-%, insbesondere wenigstens 60 Gew.-%, bezogen auf die Gesamtmasse der Substanz S, ausmacht. In ganz besonders bevorzugten Ausführungsformen der Erfindung machen die Abfallstoffe bzw. Nebenprodukte wenigstens 90 Gew.-%, bezogen auf die Gesamtmasse der Substanz S, aus.

Beispiele für solche pflanzlichen oder industriellen Abfallstoffe oder Nebenprodukte, die bei der Verarbeitung und Aufarbeitung pflanzlicher Materialien anfallen sind, ohne darauf beschränkt zu sein, Hanfstaub, Flachsstaub, Sägemehl, gemahlenes Stroh, Olivenkernmehl, Baumrindenmehl, Spuckstoffe aus der Zellstoffgewinnung Schalen von Zuckerrüben, Zuckerrohrabfälle, Reisspelzen, Getreidespelzen, sowie Mahlgut von Hanf-, Flachs-, Chinaschilf-, Kokos-, Kennaf- und Holzfasern, wobei die pflanzlichen oder industriellen Abfallstoffe oder Nebenprodukte, insbesondere in Form eines feinteiligen Materials vorliegen, das die oben angegebenen Partikelgrößen aufweist. Beispiele für ligninarme bzw. ligninfreie Celluloseprodukte sind reine Cellulose oder Rohcellulose.

In besonders bevorzugten Ausführungsformen der Erfindung handelt es sich bei der Substanz S um einen Spuckstoff aus der Zellstoffgewinnung.

In ebenfalls besonders bevorzugten Ausführungsformen der Erfindung handelt es sich bei der Substanz S um Hanfstaub oder Flachsstaub oder um ein Gemisch davon mit reiner Cellulose oder Rohcellulose, wobei der Anteil an Hanfstaub oder Flachsstaub vorzugsweise wenigsten 50 Gew.-%, insbesondere wenigsten 60 Gew.-% oder wenigsten 90 Gew.-%, bezogen auf die Gesamtmasse der Substanz S, ausmacht.

Erfindungsgemäß wird die Polymerisation der Monomerzusammensetzung in einer wässrigen Flüssigkeit durchgeführt. Zu den wässrigen Flüssigkeiten zählen neben Wasser auch Lösungsmittel-Wasser-Gemische, die bis zu 20 Gew.-%, bezogen auf die wässrige Flüssigkeit, an organischen, mit Wasser mischbaren Lösungsmitteln, z.B. Alkohole wie Methanol oder Ethanol, enthalten können. Vorzugsweise handelt es sich wie der wässrigen Flüssigkeit um Wasser, das insbesondere weniger als 5 % organische Lösungsmittel enthält.

Durch Verwendung der wässrigen Flüssigkeit kann dem System, d.h. dem Reaktionsansatz, eine für die Durchführung der Reaktionen vorteilhafte Anfangsviskosität, welche die breiige Konsistenz gewährleistet, verliehen werden. Typischerweise liegt die Anfangsviskosität (bestimmt nach DIN EN 2555-2000 mittels eines Brookfield-Viskosimeters bei 23 °C bei einem Schergefälle von < 10 sec⁻¹) im Bereich von 10 bis 1000 mPa·s, insbesondere 20 bis 300 mPa·s. Typischerweise ist weist der Reaktionsansatz Dilatanz auf, d.h. eine höhere Viskosität bei niedrigem Schergefälle von < 10 sec⁻¹ und eine niedrigere Viskosität bei höherem Schergefälle (> 100 sec⁻¹).

Die breiige Konsistenz des Reaktionsansatzes vor der Polymerisation kann in einfacher Weise über die Menge der Einsatzstoffe und der wässrigen Flüssigkeit eingestellt werden. Vorzugsweise beträgt die Gesamtmenge an Substanz S und Monomerzusammensetzung 5 bis 50 Gew.-%, insbesondere 10 bis 30 Gew.-%, bezogen auf die Gesamtmenge des Reaktionsansatzes, d.h. bezogen auf die Gesamtmenge an Substanz S, Monomerzusammensetzung und wässriger Flüssigkeit. Vorzugsweise beträgt die Menge an Substanz S 3 bis 30 Gew.-%, insbesondere 5 bis 25 Gew.-%, bezogen auf die Gesamtmenge des Reaktionsansatzes, d.h. bezogen auf die Gesamtmenge an Substanz S, Monomerzusammensetzung und wässriger Flüssigkeit.

Erfindungsgemäß wird die Polymerisation radikalisch durchgeführt. Verfahren hierzu sind dem Grunde nach bekannt. In Zusammenhang mit der vorliegenden Erfindung wird auf die Offenbarungen in der DE 36 13 207 A1 und die US 7.607.259 B2, hier insbesondere auf Spalte 2, Zeilen 14 bis 63 verwiesen.

In der Regel wird man zu diesem Zweck einen Polymerisationsinitiator zu dem Reaktionsansatz geben und gegebenenfalls den Reaktionsansatz auf die Polymerisationstemperatur erwärmen. Als Polymerisationsinitiator können sämtliche unter den Polymerisationsbedingungen Radikale erzeugende Verbindungen eingesetzt werden, beispielsweise thermische Initiatoren, Redox-Initiatoren oder Photoinitiatoren. Bevorzugt sind thermische Initiatoren, insbesondere solche mit einer Peroxid-Gruppe, sowie Redox-Initiatoren. Geeignete thermische Initiatoren sind insbesondere die Salze der Peroxodischwefelsäure wie Natriumperoxodisulfat, Kaliumperoxodisulfat und Ammoniumperoxodisulfat. Geeignete Redox-Initiatoren sind vor allem Peroxide in Kombination mit einem oder mehreren Reduktionsmitteln. Beispiele für Peroxide sind Wasserstoffperoxid und die zuvor genannten Salze der Peroxodischwefelsäure. Beispiele für Reduktionsmittel sind Ascorbinsäure, Natriumbisulfit, Salze der 2-Hydroxy-2-sulfinatoessigsäure sowie Salze der 2-Hydroxy-2-sulfonatoessigsäure, insbesondere die Natriumsalze, sowie Gemische der Reduktionsmittel. Beispiele für Redox-Initiatorsysteme sind Natriumperoxodisulfat/Ascorbinsäure, Wasserstoffperoxid/ Ascorbinsäure, Natriumperoxodisulfat/Natriumbisulfit und Wasserstoffperoxid/Natriumbisulfit. In einer Ausführungsform der Erfindung werden Mischungen aus thermischen Initiatoren und Redox-Initiatoren eingesetzt, wie Natriumperoxodisulfat/Wasserstoffperoxid/Ascorbinsäure. Als reduzierende Komponente wird vorzugsweise ein Gemisch aus dem Natriumsalz der 2-Hydroxy-2-sulfinatoessigsäure, dem Dinatriumsalz der 2-Hydroxy-2-sulfonatoessigsäure und Natriumbisulfit eingesetzt (als Brüggolit® FF6M oder Brüggolit® FF7, alternativ BRUGGOLITE® FF6M oder BRUGGOLITE® FF7 erhältlich von L. Brüggemann KG, Salzstraße 131, 74076 Heilbronn, Deutschland, www.brueggemann.com). In einer anderen Ausführungsform wird als Initiator ein thermischer Initiator eingesetzt, vorzugsweise ein Salz der Peroxodischwefelsäure wie Natriumperoxodisulfat.

Die Polymerisation kann in Gegenwart eines Hydrochinonhalbethers als Regler/Moderator durchgeführt werden. Der Reaktionsansatz enthält vorzugsweise höchstens 250 Gew.-ppm, bevorzugt höchstens 130 Gew.-ppm, besonders bevorzugt höchstens 70 Gew.-ppm, Hydrochinonhalbether, jeweils bezogen auf das Monomer A. Sofern erwünscht liegt der Gehalt der Monomerzusammensetzung an Hydrochinonhalbether häufig wenigstens 10 Gew.-ppm, insbesondere mindestens 30 Gew.-ppm, speziell bei etwa 50 Gew.-ppm, bezogen auf die Menge der Monomere A. Beispielsweise kann zur Herstellung der Monomerzusammensetzung ein ethylenisch ungesättigtes, Monomer A mit einem entsprechenden Gehalt an Hydrochinonhalbether verwendet werden. Bevorzugte Hydrochinonhalbether sind Hydrochinonmonomethylether (MEHQ) und/oder alpha-Tocopherol (Vitamin E).

Zur Polymerisation wird man die Bestandteile des Reaktionsansatzes, d.h. die Monomerzusammensetzung, die Substanz S und die wässrige Flüssigkeit sowie gegebenenfalls, sofern erwünscht, Harnstoff zusammengeben und zu dem Gemisch den Polymerisationsinitiator geben. Sofern erforderlich, wird man dann das Gemisch auf Polymerisationstemperatur erwärmen. Man kann zunächst auch die Mischung aus Monomerzusammensetzung, Substanz S und wässriger Flüssigkeit auf die gewünschte Reaktionstemperatur erwärmen und hierzu den Polymerisationsinitiator geben. Die Reihenfolge der Zugabe von Monomerzusammensetzung, Substanz S und wässriger Flüssigkeit sowie gegebenenfalls Harnstoff ist von untergeordneter Bedeutung.

Die zur Polymerisation erforderliche Temperatur hängt naturgemäß von dem verwendeten Initiator ab und liegt typischerweise im Bereich von 20 bis 100°C häufig im Bereich von 60 bis 100°C und insbesondere im Bereich von 70 bis 90°C.

Aufgrund der Anwesenheit der sauren Monomere A weist das Gemisch aus Monomerzusammensetzung, Substanz S und wässriger Flüssigkeit typischerweise einen sauren pH-Wert auf. In der Regel erfolgt die Polymerisation daher bei einem pH-Wert < 6, häufig bei einem pH-Wert von maximal pH 5 oder insbesondere bei einem pH-Wert von maximal pH 4 oder maximal pH 3,5. Insbesondere erfolgt die Polymerisation bei einem pH-Wert im Bereich von pH 1 bis pH 4, speziell bei einem pH-Wert im Bereich von pH 1 bis pH 3,5.

Die Polymerisation kann als Batchverfahren durchgeführt werden. Hierzu wird man üblicherweise die Bestandteile des Reaktionsansatzes in einem geeigneten Polymerisationsgefäß vermischen, wobei man vorzugsweise die Menge an wässriger Flüssigkeit so wählt, dass der Ansatz eine breiige Konsistenz aufweist. Zu dieser Mischung gibt man dann den Polymerisationsinitiator und erwärmt gegebenenfalls auf die notwendige Polymerisationstemperatur. Hierbei hat es sich als vorteilhaft erwiesen, dass das Polymerisationsgemisch, welches den Initiator enthält, nicht gerührt werden muss. Vielmehr läuft die Polymerisation gleichmäßig und vollständig ab, ohne dass ein aufwändiges Durchmischen des Polymerisationsgemischs während der Polymerisation notwendig ist.

Die Polymerisation kann auch kontinuierlich durchgeführt werden. Hierzu wird man üblicherweise ein Gemisch der Bestandteile des Reaktionsansatzes in eine bei Polymerisationstemperatur befindliche Reaktionszone einspeisen und in diese Reaktionszone den Initiator einspeisen. Die Menge an wässriger Flüssigkeit in dem Gemisch der Bestandteile des Reaktionsansatzes wird vorzugsweise so gewählt, dass das Gemisch eine breiige Konsistenz aufweist. Die Reaktionszone ist vorzugsweise mit Vorrichtungen zur Durchmischung der Bestandteile ausgerüstet. In einer bevorzugten Ausgestaltung der kontinuierlichen Polymerisation erfolgt die Durchführung der Polymerisation in einem mit einer rotierenden Schnecke ausgerüsteten beheizbaren Reaktionsgefäß, beispielsweise einem beheizbaren Schneckenextruder.

Zur Durchführung der Polymerisation ist ein Ausschluss von Sauerstoff nicht erforderlich. Mit anderen Worten, die Polymerisation kann in Anwesenheit von Luftsauerstoff, d.h. unter Luft, durchgeführt werden. Die Polymerisation kann aber auch unter weitgehendem Ausschluss von Sauerstoff durchgeführt werden, beispielsweise unter Inertgas.

Erfindungsgemäß werden die Polymerisation und/oder die Neutralisation in Gegenwart von Harnstoff durchgeführt. Der Harnstoff kann bereits während der Polymerisation zugegen sein oder im Anschluss an die Polymerisation vorzugsweise vor oder während der Verseifung zugegeben werden.

Es hat sich als günstig erwiesen, wenn der Harnstoff während der Neutralisation zugegen ist. Auf diese Weise gestaltet sich die Aufarbeitung, speziell die Neutralisation/Verseifung leichter. Insbesondere werden durch die Anwesenheit von Harnstoff Nachteile, wie sie bei der Neutralisation/Verseifung des wässrigen, in der Regel sauren Polymerisationsgemischs auftreten, beispielsweise das Auftreten schlecht zerkleinerbarer, halbfester, gummiartiger Phasen, verringert bzw. das Aufbrechen und Zerkleinern derartiger Phasen erleichtert.

Insbesondere geht man so vor, dass man das in Schritt i. erhaltene Polymerisat vor oder während der Neutralisation in Schritt ii. mit Harnstoff behandelt. Vorzugsweise wird die Polymerisation nicht in Gegenwart von Harnstoff durchgeführt.

Vorzugsweise setzt man den Harnstoff als Lösung, insbesondere als wässrige Lösung, insbesondere als konzentrierte Lösung, speziell als konzentrierte wässrige Lösung, z.B. mit einer Konzentration im Bereich von 30 bis 70 Gew.-%, insbesondere 40 bis 60 Gew.-%, z.B. etwa 50 Gew.-%, ein.

Die Menge an Harnstoff wird dabei in der Regel so gewählt, dass die Gesamtmenge an Harnstoff im Bereich von 1 bis 20 Gew.-%, häufig im Bereich von 3 bis 15 Gew.-% und insbesondere im Bereich von 5 bis 10 Gew.-%, bezogen auf den Reaktionsansatz, d.h. bezogen auf die Gesamtmenge an Monomerzusammensetzung, wässriger Flüssigkeit, oder bezogen auf die Gesamtmasse des in Schritt i) erhaltenen Polymerisationsprodukts, vor Abtrennung etwaiger Flüssigkeitsmengen, liegt. Bezogen auf die Gesamtmenge an Monomerzusammensetzung und Substanz S liegt die Menge an Harnstoff vorzugsweise im Bereich von 5 bis 60 Gew.-%, insbesondere 10 bis 50 Gew.-%, speziell 15 bis 45 Gew.-%,

Erfindungsgemäß wird in Schritt ii. das in Schritt i. erhaltene Polymerisat einer Neutralisation oder einer Verseifung unterworfen, wobei entsprechend der Art der Monomere A eine wenigstens partielle Neutralisation bzw. Verseifung der sauren bzw. verseifbaren funktionellen Gruppen der Monomere stattfindet.

Zur Neutralisation/Verseifung wird man in der Regel das in Schritt i. erhaltene Polymerisat mit einer zur Neutralisation bzw. Verseifung geeigneten Base behandeln. Typische Basen sind Alkali wie Natriumhydroxid oder Kaliumhydroxid sowie Ammoniak.

In der Regel setzt man die Base in Form einer Lösung, insbesondere einer wässrigen Lösung ein, beispielsweise in Form von konzentriertem Ammoniak oder in Form eine konzentrierten wässrigen Lösung des Alkalimetall-Hydroxids, z.B. in Form einer 20 bis 70 gew.-%igen Lösung, insbesondere einer 40 bis 60 gew.-%igen Lösung.

Die Menge an Base wird so gewählt, dass eine mindestens teilweise Neutralisation/Verseifung der neutralisierbaren/verseifbaren Gruppen in den im Polymerisat einpolymerisierten Monomeren A gewährleistet ist. Vorzugsweise wird die Menge an Base so gewählt, dass zumindest theoretisch eine wenigstens 25 %ige, insbesondere wenigstens 50 %ige, speziell wenigstens 60 %ige oder vollständige Neutralisation/Verseifung gewährleistet ist, d.h. die Menge an Base wird vorzugsweise so gewählt, dass die Basenäquivalente wenigstens 25 mol-%, insbesondere wenigstens 50 mol-%, speziell wenigstens 60 mol-%, bezogen auf die neutralisierbaren/verseifbaren funktionellen Gruppen in den einpolymerisierten Monomeren A, ausmachen.

Die Neutralisation/Verseifung kann unmittelbar vor, gleichzeitig oder im Anschluss an die Zugabe des Harnstoffs erfolgen und erfolgt in jedem Fall im Anschluss an die Polymerisation.

In einer bevorzugten Ausführungsform erfolgt die Neutralisation durch Zugabe der Base, vorzugsweise in Form einer Lösung, insbesondere einer wässrigen Lösung, zu dem wässrigen Polymerisationsprodukt, das ggf. bereits Harnstoff enthält.

Die Neutralisation kann unter Zusatz von weiterem Wasser oder einem oder mehreren mit Wasser mischbaren organischen Lösungsmitteln, beispielsweise einem C₁-C₄-Alkanol, speziell Methanol oder Ethanol durchgeführt werden.

Die Neutralisation erfolgt in der Regel unter Durchmischen der Bestandteile, vorzugsweise unter starker Scherung, wobei das Polymerisat in Form von Partikeln eines gequollenen Gels anfällt.

Zur Gewinnung des Polymerisats wird man typischerweise das neutralisierte Polymerisat im Anschluss an die Neutralisation von der wässrigen Flüssigkeit und den gegebenenfalls bei der Neutralisation und/oder mit Harnstoff eingebrachten Flüssigkeitsbestandteilen abtrennen, beispielsweise durch Zentrifugation oder Filtration, und anschließend trocknen.

Die Trocknung kann in an sich bekannter Weise erfolgen, beispielsweise in geeigneten Trocknern, beispielsweise Trockenschränken, Schaufeltrocknern, Bandtrocknern oder Walzentrocknern. Vorzugsweise führt man die Trocknung, bis der Gehalt an Feuchtigkeit (Wasser und ggf. Lösungsmittel) nicht mehr als 20 Gew.-%, insbesondere nicht mehr als 10 Gew.-%, z.B. bis zu einem Restfeuchtegehalt von 0,5 bis 20 Gew.-%, insbesondere 1 bis 15 Gew.-%, speziell 1 bis 10 Gew.-%.

Das getrocknete Polymerisat kann gemahlen und klassiert werden. Zur Mahlung können üblicherweise ein- oder mehrstufige Walzenstühle, bevorzugt zwei- oder dreistufige Walzenstühle, Stiftmühlen, Hammermühlen oder Schwingmühlen eingesetzt werden. Übergroße, oft im Inneren noch nicht getrocknete Gelklumpen sind gummielastisch, und können zu Problemen bei der Mahlung führen und werden daher vorzugsweise vor der Mahlung abgetrennt, was durch Windsichtung oder ein Sieb ("Schutzsieb" für die Mühle) in einfacher Weise erfolgen kann. Die Maschenweite des Siebs ist angesichts der verwendeten Mühle so zu wählen, dass möglichst keine Störungen durch übergroße, gummielastische Partikel auftreten.

Auf diese Weise wird das Polymerisat in Form eines Granulats, insbesondere eines rieselfähigen Granulats erhalten.

Das erfindungsgemäß erhältliche Polymerisat ist aus den polymerisierten Monomeren der Monomerzusammensetzung M und der bei der Polymerisation eingesetzten Substanz S aufgebaut und enthält zudem wenigstens einen Teil des bei der Polymerisation bzw. Neutralisation/Verseifung anwesenden Harnstoffs. Das Gewichtsverhältnis von polymerisierten Monomeren M und der Substanz S entspricht dabei weitgehend den Einsatzmengen und liegt daher im Bereich von 1 : 9 bis 9 :1 , vorzugsweise im Bereich von 2 : 8 bis 8 : 2 und insbesondere im Bereich von 7 : 3 bis 3 : 7, wobei für Berechnung dieses Verhältnisses der Anteil des aus den Monomeren A stammenden Polymerisats die eingesetzte saure bzw. verseifbare Form zugrunde gelegt wird. Die polymerisierten Monomere bilden dabei eine Matrix, in der die Substanz S in fein verteilter Form vorliegt.

Ohne an eine Theorie gebunden zu sein, nimmt man an, dass es unter den Polymerisationsbedingungen zu einer effizienten Pfropfung des sich bei der Polymerisation der Monomere bildenden Polymernetzwerks auf die Polysaccharid-Ketten kommt.

In den erfindungsgemäß erhältlichen Polymerisaten liegen die neutralisierbaren bzw. verseifbaren Gruppen wenigstens teilweise in Form von neutralisierten Säuregruppen, d.h. in Form anionischer Gruppen, vor, beispielsweise im Falle von Carbonsäuregruppen bzw. zu Carbonsäuregruppen verseifbaren Gruppen (wie z.B. Nitrilgruppen) als Carboxylatgruppen. Der Anteil der neutralisierten Säuregruppen im Polymerisat beträgt in der Regel wenigstens 25 mol-%, insbesondere wenigstens 50 mol-%, speziell wenigstens 60 mol-%, bezogen auf die Gesamtmenge aller neutralisierbaren/verseifbaren funktionellen Gruppen in den einpolymerisierten Monomeren A.

Die erfindungsgemäß erhältlichen Polymerisate zeichnen sich durch eine gute Wasseraufnahmekapazität und ein gutes Wasserhaltevermögen aus. In der Regel beträgt die Wasseraufnahmekapazität wenigstens 50 g, insbesondere wenigstens 200 g und speziell wenigstens 300 g pro g Polymerisat, gerechnet als ofentrockener Stoff (atro). Häufig liegt die Wasseraufnahmekapazität im Bereich von 50 bis 800 g pro g Polymerisat (atro), insbesondere 200 bis 800 g pro g Polymerisat (atro) und speziell 300 bis 600 g pro g Polymerisat (atro). Die hier angegebene Wasseraufnahmekapazität ist die Menge an Leitungswasser der Härte dH° = 4, die das Polymerisat bei 22°C aufnimmt. Die Wasseraufnahmekapazität kann in an sich bekannter Weise bestimmt werden, z.B. als Zentrifugenretentionskapazität in Analogie zu der Standard-Testmethode Nr. WSP 241.5-02 "Centrifuge retention capacity" wie beschrieben in: "Standard Test Methods for the Nonwovens Industry", Ausgabe 2005, gemeinsam herausgegeben von den "Worldwide Strategic Partners" EDANA (European Disposables and Nonwovens Association, Avenue Eugene Plasky, 157, 1030 Brussels, Belgium, www.edana.org) und INDA (Association of the Nonwoven Fabrics Industry, 1100 Crescent Green, Suite 115, Cary, North Carolina 27518, U.S.A., www.inda.org).

Im Hinblick auf die Anwendung wird das Polymerisat vorzugsweise in Form eines rieselfähigen Granulats bereitgestellt. In derartigen Granulaten beträgt die mittlere Partikelgröße der Polymerisatpartikel im Allgemeinen mindestens 200 µm, bevorzugt mindestens 250 µm und in bevorzugter Form mindestens 300 µm sowie im Allgemeinen höchstens 2000 µm, insbesondere höchstens 1500 µm und speziell höchstens 1000 µm. Der Anteil an Partikeln mit einer Partikelgröße von mindestens 150 µm beträgt im Allgemeinen mindestens 90 Gew.-%, vorzugsweise mindestens 95 Gew.-% und in besonders bevorzugter Weise mindestens 98 Gew.-%. Der Anteil an Partikeln mit einer Partikelgröße von höchstens 3000 µm, beträgt im Allgemeinen mindestens 90 Gew.-%, vorzugsweise mindestens 95 Gew.-% und in besonders bevorzugter Weise mindestens 98 Gew.-%. Die Partikelgrößenverteilung und die mittlere Partikelgröße der Granulate kann gemäß der Standard-Testmethode Nr. WSP 220.2-05 "Partikel size distribution" ermittelt werden.

Aufgrund ihrer Eigenschaft, große Mengen an Wasser zu binden und zu speichern bei gleichzeitig hoher Verrottbarkeit sind die erfindungsgemäßen Polymerisate für eine Vielzahl von Anwendungen geeignet, die ebenfalls Gegenstand der Erfindung sind.

Die erfindungsgemäßen Polymerisate können vorteilhaft zur kontrollierten Abgabe von Flüssigkeiten, insbesondere Wasser und wässrigen Lösungen, Dispersionen und Emulsionen verwendet werden.

Insbesondere eignen sich die erfindungsgemäßen Polymerisate zur Verbesserung von Bodenqualitäten, insbesondere im kommerziellen Pflanzenanbau. Zur Verbesserung der Bodenqualität wird man typischerweise die erfindungsgemäßen Polymerisate in Aufwandmengen von 1 bis 1000 kg/ha, insbesondere in einer Menge von 1 bis 25 kg/h in die Bodenflächen oder in einer Menge von 0,1 bis 100 kg/Tonne Bodenmasse einarbeiten. In diesem Zusammenhang eignen sich die erfindungsgemäßen Polymerisate zur Verbesserung der Qualität von Pflanzenerde, Gartenerde, von Wiesen-, Rasen- und Waldböden, oder von Ackererde bzw. Ackerflächen. Speziell eignen sich die erfindungsgemäßen Polymerisate zur Rückhaltung und Speicherung von Feuchtigkeit in Anbauflächen für Kulturpflanzen. Die erfindungsgemäßen Polymerisate eignen sich weiterhin in besondere Weise zur Herstellung von Kulturböden und zum Rekultivieren von verödeten Flächen.

Die erfindungsgemäßen Polymerisate können weiterhin als Bodenzusatzmittel zur Staubverminderung, beispielsweise bei Reitplätzen verwendet werden. Die erfindungsgemäßen Polymerisate können weiterhin als Bindemittel bei Grünbefestigungen von Straßenrändern, Hängen, Wegen und Plätzen und Dachbegrünungen verwendet werden. Die erfindungsgemäßen Polymerisate können in Tierställen zur Bindung von Tierexkrementen und unangenehmen Gerüchen verwendet werden.

Die erfindungsgemäßen Polymerisate können weiterhin als Trägersubstanz für die Bodenstruktur verbessernde Mittel, als Trägersubstanz für Boden auflockernde Mittel, als Trägersubstanz für biologisch aktive Substanzen und Wirkstoffe wie Pflanzenschutzmittel, Mineralien, Düngemittel insbesondere für die kontrollierte Abgabe dieser Substanzen eingesetzt werden.

Ein weiterer Gegenstand der Erfindung ist die Verwendung der erfindungsgemäßen Polymerisate als Löschmittelzusatz bei der Brandbekämpfung.

Ein weiterer Gegenstand der Erfindung ist die Verwendung der erfindungsgemäßen Polymerisate zur Herstellung von verrottbaren oder auflösbaren Blumen- oder Pflanzentöpfen, sowie die Verwendung der Verwendung der erfindungsgemäßen Polymerisate als Pflanzensubstrate.

### I. Herstellungsbeispiele:

### Beispiel 1

600 g von löslichem Lignin freier Spuckstoff (holzartiger Abfallstoff, der bei der Zellstoffgewinnung für Papier anfällt) 870 g Acrylsäure, 6 I voll entsalztes Wasser, 6,45 g Methylenbisacrylamid, 1,5 g Ammoniumpersulfat wurden gut zu einem Brei vermischt und in eine 10 I Eimer gefüllt. Der Eimer wurde in ein auf 85° C thermostatisiertes Wasserbad gestellt. Nach etwa 2 Stunden hatte die Masse eine Temperatur von 78 °C erreicht. Die Masse war dann fest. Man ließ das Polymerisationsgemisch unter Beibehaltung der Badtemperatur noch eine 1 h stehen. Das gummiartige, leicht klebrige Polymerisationsgemisch ließ sich leicht aus dem Eimer in einem Stück herausnehmen.

### Gesamtausbeute 6,62 kg.

Zur anschließenden Neutralisation wurde der Gummikuchen zunächst zerkleinert, dann mit 18 I Methanol versetzt und gut gemischt. Es entstand ein dicker Brei. Dann gab man 675 g einer 50 gew.-%igen wässrigen KOH Lösung und 728 g einer 50 gew.-%igen wässrigen Harnstofflösung zusammen mit 3 I Methanol zu und durchmischte das ganze ca. 15 min kräftig. Das Produkt koagulierte sofort bei Zugabe der Harnstofflösung zu einer kaugummiartigen Masse, die aber sehr schnell zu einem körnigen Produkt zerfiel. Sobald der pH-Wert bei 6 bis 7 lag, was nach 15 min Mischen eintrat, filtrierte man den erhaltenen Feststoff ab und trocknete ihn im Vakuum bei 55 °C.

Der so erhaltene, hellbraune, rieselfähige Feststoff zeigte bei 22 °C eine Wasseraufnahmekapazität von bis zu 550 g Leitungswasser dH° = 4 pro g Feststoff.

### Beispiel 2

30 g Flachsstaub, 10 g Rohcellulose, 58 g Acrylsäure, 0,43 g Methylenbisacrylamid, 0,1 g Ammoniumpersulfat, 370 ml VE-Wasser und 48 g einer 50 gew.-%igen wässrigen Harnstofflösung und 0,4 g eines kommerziellen für Textilfasern üblichen Netzmittels z.B. ein Triumpf-Netzer (Contripon® S der Firma Zschimmer & Schwarz, 09218 Burgstädt) wurden kräftig durchmischt. Dieses breiige Gemisch wurde in einen 1 I Polyethylen Eimer gegeben. Der Eimer wurde in ein auf 85 °C thermostatisiertes Wasserbad gestellt. Nach ca. 1 Stunde hatte das Reaktionsgemisch bereits die Maximaltemperatur von 71 °C erreicht. Man ließ das Polymerisationsgemisch unter Beibehaltung der Badtemperatur noch eine 1 h stehen. Anschließend wurde das gummiartige, leicht klebrige Polymerisationsgemisch in einem Stück aus dem Eimer entnommen.

### Ausbeute 509,1 g.

Nun wurde der gummiartige Kuchen mit 1 I Methanol versetzt und mit einem Ultra-Turrax zerkleinert. Es entstand ein dicker, brauner Brei, der unter ständigem, kräftigen Rühren mit einer Lösung von 250 ml Methanol und 45,1 g einer 50 gew.-%igen wässrigen KOH-Lösung versetzt wurde. Bei der Zugabe bildete sich sofort ein zäher Klumpen, der unter kräftigem Rühren aber sehr schnell in eine körnige Masse. Nach 10 min wurde die Behandlung beendet. Das erhaltene Produkt wurde abfiltriert und unter den für Beispiel 1 angegebenen Bedingungen getrocknet. Die Wasseraufnahmekapazität des Produkts für Leitungswasser dH 4° betrug 400 g/g Produkt bei 22 °C.

### Beispiel 3

160 g gemahlene Cellulose ARBOCEL BC 1000 der Fa. Rettenmeier, 240 g Acrylsäure, 1600g VE-wasser, 1,72 g Methylenbisacrylamid, 0,4 g Ammoniumpersulfat wurden zu einem homogenen Brei kräftig vermischt, in einen mittelgroßen Eimer gegossen und dieser wurde in ein Wasserbad von 87 °C gesetzt. Nach ca. 2 Stunde hatte das Reaktionsgemisch die Maximaltemperatur von 91°C erreicht. Man ließ noch 1 Stunde bei 87 °C Badtemperatur nachreagieren, wobei die Massetemperatur des Eimerinhaltes wieder bis auf 84 °C abfiel. Anschließend wurde der gummiartige, leicht klebrige Produktkuchen in einem Stück aus dem Eimer entnommen.

### Ausbeute 1937,2 g.

Nun wurde der gummiartige Kuchen mit 3,5 I Methanol versetzt und mit einem Ultra-Turrax Gerät zerkleinert. Es entstand ein dicker, weißer Brei, der unter ständigem, kräftigen Rühren mit einer Lösung von 1000 ml Methanol, 186,7 g einer 50 gew.-% igen wässrigen KOH-Lösung und 200g einer 50 gew.-%igen wässrigen Lösung von Harnstoff versetzt wurde. Bei der Zugabe bildete sich sofort ein zäher Klumpen, der aber unter kräftigem Rühren sehr schnell in eine körnige Masse zerfiel. Nach 10 min wurde die Behandlung beendet. Das erhaltene Produkt wurde abfiltriert und unter den für Beispiel 1 angegebenen Bedingungen getrocknet. Die Wasseraufnahmekapazität des Produkts für Leitungswasser dH 4° betrug 400 g/g Produkt bei 22°C.

### II. Untersuchung der biologischen Abbaubarkeit

Es wurden die folgenden Produkte getestet:

### Polymerisat aus Beispiel 1

### Kommerzieller Superabsorber auf Basis von vernetzter Polyacrylsäure (Luquasorb 1280 BASF SE)

Zur Untersuchung der Abbaubarkeit wurde die C-Mineralisation der Polymerisate in drei Böden in Mikrokosmen über die Dauer von 271 Tagen bei 20 °C untersucht. Stroh diente als Referenzsubstanz. Nach 271 Tagen ließen sich für Stroh im Mittel der Böden 62 % des Kohlenstoffs als CO₂ nachweisen, 33 % im Falle des Polymerisats aus Beispiel 1 und 6 % bei dem kommerziellen Superabsorber. Da bei Stroh und den Polymerisaten die C-Mineralisation nach anfänglich starker Mineralisation nach 90 Tagen in einen linearen Anstieg überging, ließen sich die Mineralisationsdaten extrapolieren. Auf zwei Jahre extrapoliert ergaben sich Abbauraten für Stroh von 92 %, für das Polymerisat aus Beispiel 1 von 51 % und für den kommerziellen Superabsorber von 17 %. Nach Korrektur der Mineralisation für eine Jahresdurchschnittstemperatur eines Bodens von 10 °C berechneten sich dann Mineralisationsraten für das Polymerisat aus Beispiel 1 von 20 % und für den kommerziellen Superabsorber von knapp 7 % über zwei Jahre hinweg.

### III. Untersuchung der bodenverbessernden Wirkung

Es wurden die folgenden Produkte getestet:

### Polymerisat aus Beispiel 2

### Kommerzielles Polymerisat in Form eines Kaliumsalzes eines auf Stärke gepfropften Acrylsäure-Acrylamid-Copolymers (Zeba® Farm der Fa. Absorbent Technologies, Inc. Beaverton, Oregon 97008)

### Kommerzieller Superabsorber auf Basis von vernetzter, teilneutralisierter Polyacrylsäure (Luquasorb® 1280 BASF SE)

Die Untersuchung erfolgte im Freiland auf einer Ackerfläche in Mittelitalien in einem sandigen Boden. Die jeweiligen Produkte wurden in einer Aufwandmenge von 20 kg/ha in den Boden eingearbeitet. In die so behandelten Böden wurden am 27. Juli 2012 Tomatensetzlinge (150 Setzlinge / 40 m²) eingepflanzt. Ein Versuchsfeld wurde zu 100 % bewässert ein weiteres Versuchsfeld wurde zu 50 % bewässert.

Während der Versuchsdauer, d.h. bis zur Ernte am 1.10.2012, wurde der Vigor (Pflanzengesundheit) der Pflanze anhand von Wuchshöhe, Grünintensität der Pflanze, Blattzahl und Befall mit Erkrankungen visuell beurteilt und auf eine Skala von 0 bis 10 bewertet, wobei 0 ein besonders schlechter Vigor und 10 ein besonders guter Vigor bedeutet. Außerdem wurde die Menge der abgeernteten Tomaten bestimmt. Die Ergebnisse sind in den folgenden Tabellen 1 und 2 angegeben.

**Tabelle 1: Pflanzenvigor**

| | Vigor/100 % Bewässerung | Vigor / 50 % Bewässerung |
|---|---|---|
| Kein Zusatz | 5 | 5 |
| Luqasorb® 1280 | 5,3 | 6,7 |
| Zeba®Farm | 6,3 | 6,7 |
| Polymerisat aus Bsp. 2 | 7,0 | 8,3 |

**Tabelle 2: Ernteertrag**

| | Ertrag /100 % Bewässerung [kg/ha] | Ertrag / 50 % Bewässerung [kg/ha] |
|---|---|---|
| Kein Zusatz | 4035 | 1496 |
| Luqasorb® 1280 | 6695 | 10059 |
| Zeba®Farm | 8356 | 7470 |
| Polymerisat aus Bsp. 2 | 9010 | 11297 |

## Patentansprüche

1. Verfahren zur Herstellung von Polymerisaten, die geeignet sind, wässrige Flüssigkeiten aufzunehmen und zu speichern, umfassend die folgenden Schritte:
i. vernetzende radikalische Polymerisation einer Monomerzusammensetzung M, die
a) wenigstens ein Monomer A, das ausgewählt sind unter monoethylenisch ungesättigten C₃-C₈-Monocarbonsäuren, deren Gemischen und Gemischen wenigstens einer monoethylenisch ungesättigten C₃-C₈-Monocarbonsäure mit ein oder mehreren monoethylenisch ungesättigten C₄-C₈-Dicarbonsäuren,
b) gegebenenfalls ein oder mehrere, von den Monomeren A verschiedene Comonomere B, die eine ethylenische Doppelbindung aufweisen, und
c) 0,05 bis 10 Gew.-%, bezogen auf die Gesamtmenge der Monomere A und B, wenigstens eines Vernetzers C
umfasst, in Gegenwart wenigstens eines feinteiligen, partikelförmigen Cellulosematerials S, das gebundenes Lignin enthält, in einer wässrigen Flüssigkeit, wobei das Gewichtsverhältnis der Monomerzusammensetzung M zu der Substanz S im Bereich von 9 : 1 bis 1 : 9 liegt; und
ii. wenigstens teilweise Neutralisation der Säuregruppen in dem in Schritt i. erhaltenen Polymerisat;
wobei man die Polymerisation und/oder die Neutralisation in Gegenwart von Harnstoff durchführt und wenigstens 90 Gew.-% der Partikel des partikelförmigen Cellulosematerials Abmessungen im Bereich von 1 µm bis < 500 µm, bestimmt durch Siebanalyse, aufweisen.

2. Verfahren nach Anspruch 1, wobei man das in Schritt i. erhaltene Polymerisat vor oder während der Neutralisation oder Hydrolyse in Schritt ii. mit Harnstoff behandelt.

3. Verfahren nach einem der vorhergehenden Ansprüche, wobei die Gesamtmenge an Harnstoff 1 bis 20 Gew.-%, bezogen auf die Gesamtmenge an Monomerzusammensetzung M, Substanz S und wässriger Flüssigkeit, beträgt.

4. Verfahren nach Anspruch 1, wobei das Cellulosematerial zu wenigstens 50 Gew.-%, bezogen auf die Gesamtmenge an Substanz S, unter Hanfstaub, Flachsstaub, Sägemehl, gemahlenem Stroh, Olivenkernmehl, Baumrindenmehl, Spuckstoff aus der Zellstoffgewinnung, Schalen von Zuckerrüben, Zuckerrohrabfällen, Reisspelzen, Getreidespelzen, sowie Mahlgut von Hanf-, Flachs-, Chinaschilf-, Kokos-, Kennaf- und Holzfasern ausgewählt ist.

5. Verfahren nach einem der vorhergehenden Ansprüche, wobei wenigstens 90 Gew.-% der Partikel des partikelförmigen Cellulosematerials Abmessungen im Bereich von 5 bis < 300 µm, bestimmt durch Siebanalyse, aufweisen.

6. Verfahren nach einem der vorhergehenden Ansprüche, wobei die Monomere A wenigstens 50 Gew.-%, bezogen auf die Gesamtmenge der Monomere in der Monomerzusammensetzung, ausmachen und insbesondere zu wenigstens 50 Gew.-%, bezogen auf die Gesamtmenge der Monomere A, Acrylsäure umfassen.

7. Verfahren nach einem der vorhergehenden Ansprüche, wobei die Vernetzer C ausgewählt sind unter ethylenisch ungesättigten Monomeren, die wenigstens 2 ethylenisch ungesättigte Doppelbindungen aufweisen.

8. Verfahren nach einem der vorhergehenden Ansprüche, wobei man die Polymerisation unter Sauerstoff enthaltender Atmosphäre, insbesondere unter Luft, vorzugsweise unter atmosphärischem Druck durchführt.

9. Verfahren nach einem der vorhergehenden Ansprüche, wobei man zu Anfang der Polymerisation eine Viskosität des Reaktionsansatzes, bestimmt nach DIN EN 2555-2000 mittels eines Brookfield-Viskosimeters bei 23 °C bei einem Schergefälle von < 10 sec⁻¹, im Bereich von 10 bis 1000 mPa.s einstellt.

10. Verfahren nach einem der vorhergehenden Ansprüche, wobei man die Polymerisation bei einem pH-Wert unterhalb 6 durchführt.

11. Verfahren nach einem der vorhergehenden Ansprüche, wobei man im Anschluss an die Neutralisation das Polymerisat von der wässrigen Flüssigkeit abtrennt und trocknet.

12. Ein zur Aufnahme und Speicherung wässriger Flüssigkeiten geeignetes Polymerisat, erhältlich durch ein Verfahren nach einem der vorhergehenden Ansprüche.

13. Polymerisat nach Anspruch 12, das eine Wasseraufnahmekapazität von 50 bis 800 g pro g Polymerisat, gerechnet als ofentrockener Stoff, insbesondere 200 bis 800 g pro g Polymerisat, gerechnet als ofentrockener Stoff, und speziell 300 bis 600 g pro g Polymerisat, gerechnet als ofentrockener Stoff, aufweist.

14. Polymerisat nach Anspruch 12 oder 13, in Form eines rieselfähigen Granulats.

15. Verwendung von Polymerisaten gemäß Anspruch 12, 13 oder 14 für einen der folgenden Zwecke:
a) zur Verbesserung von Bodenqualitäten von Pflanzen-, Garten- Wiesen-, Rasen-, Wald-, oder Ackererde sowie zur Herstellung von Kulturboden und zum Rekultivieren von verödeten Flächen;
b) zur Rückhaltung und Speicherung von Feuchtigkeit in Anbauflächen für Kulturpflanzen;
c) zur Verbesserung als Trägersubstanz für Bodenstruktur verbessernde, Boden auflockernde Mittel, biologisch aktive Substanzen, Wirkstoffe wie Pflanzenschutzmittel, Mineralien, Düngemittel insbesondere für die kontrollierte Abgabe von Wirkstoffen, Mineralien und Düngemitteln;
d) als Bodenzusatzmittel zur Staubverminderung bei Reitplätzen, in Tierställen zur Bindung von Tierexkrementen und unangenehmen Gerüchen oder als Bindemittel bei Grünbefestigungen von Straßenrändern, Hängen, Wegen und Plätzen und Dachbegrünungen oder als Löschmittelzusatz bei der Brandbekämpfung;
e) zur kontrollierten Abgabe von wässrigen Flüssigkeiten, insbesondere Wasser und wässrigen Lösungen, Dispersionen und Emulsionen;
f) zur Herstellung von verrottbaren oder auflösbaren Blumen- oder Pflanzentöpfen.

## Claims

1. A process for preparing polymers suitable for absorbing and storing aqueous liquids, comprising the following steps:
i. crosslinking free-radical polymerization of a monomer composition M comprising
a) at least one monomer A selected from monoethylenically unsaturated C₃-C₈-monocarboxylic acids, mixtures thereof and mixtures of at least one monoethylenically unsaturated C₃-C₈-monocarboxylic acid with one or more monoethylenically unsaturated C₄-C₈-dicarboxylic acids,
b) optionally one or more comonomers B which are different than the monomers A and have one ethylenic double bond, and
c) 0.05 to 10% by weight, based on the total amount of monomers A and B, of at least one crosslinker C,
in the presence of at least one finely divided particulate cellulose material S comprising bound lignin, in an aqueous liquid, where the weight ratio of the monomer composition M to the substance S is in the range from 9:1 to 1 : 9; and
ii. at least partial neutralization of the acid groups in the polymer obtained in step i.;
wherein the polymerization and/or the neutralization is performed in the presence of urea and at least 90% by weight of the particles of the particulate cellulose material have dimensions in the range from 1 µm to < 500 µm, determined by sieve analysis.

2. The process according to claim 1, wherein the polymer obtained in step i. is treated with urea before or during the neutralization or hydrolysis in step ii.

3. The process according to any of the preceding claims, wherein the total amount of urea is 1 to 20% by weight, based on the total amount of monomer composition M, substance S and aqueous liquid.

4. The process according to claim 1, wherein the cellulose material is selected to an extent of at least 50% by weight, based on the total amount of substance S, from hemp dust, flax dust, sawdust, ground straw, ground olive stones, ground tree bark, reject material from pulp production, sugar beet peel, sugar cane waste, rice husks, cereal husks, and ground hemp fibers, ground flax fibers, ground Chinese silvergrass fibers, ground coconut fibers, ground kenaf fibers and ground wood fibers.

5. The process according to any of the preceding claims, wherein at least 90% by weight of the particles of the particulate cellulose material have dimensions in the range from 5 to < 300 µm, determined by sieve analysis.

6. The process according to any of the preceding claims, wherein the monomers A account for at least 50% by weight, based on the total amount of monomers in the monomer composition, and in particular comprise at least 50% by weight, based on the total amount of monomers A, of acrylic acid.

7. The process according to any of the preceding claims, wherein the crosslinkers C are selected from ethylenically unsaturated monomers having at least 2 ethylenically unsaturated double bonds.

8. The process according to any of the preceding claims, wherein the polymerization is performed under oxygen-comprising atmosphere, especially under air, preferably under atmospheric pressure.

9. The process according to any of the preceding claims, wherein a viscosity of the reaction mixture, determined to DIN EN 2555-2000 by means of a Brookfield viscometer at 23°C at a shear rate of < 10 sec⁻¹, in the range from 10 to 1000 mPa.s is established at the start of the polymerization.

10. The process according to any of the preceding claims, wherein the polymerization is performed at a pH below 6.

11. The process according to any of the preceding claims, wherein the neutralization is followed by separation of the polymer from the aqueous liquid and drying.

12. A polymer suitable for absorption and storage of aqueous liquids, obtainable by a process according to any of the preceding claims.

13. The polymer according to claim 12, having a water absorption capacity of 50 to 800 g per g of polymer, calculated as oven-dry material, particularly 200 to 800 g per g of polymer, calculated as oven-dry material, and especially 300 to 600 g per g of polymer, calculated as oven-dry material.

14. The polymer according to claim 12 or 13, in the form of free-flowing granules.

15. The use of polymers according to claim 12, 13, or 14 for one of the following purposes:
a) for improving the soil qualities of plant soil, garden soil, meadow soil, lawn soil, forest soil or field soil, and for production of crop soils and for recultivation of areas that have become infertile;
b) for retention and storage of moisture in cultivation areas for crop plants;
c) for improvement as a carrier substance for compositions which improve soil structure and loosen the soil, biologically active substances, active ingredients such as crop protection compositions, minerals, fertilizers, and especially for the controlled release of active ingredients, minerals and fertilizers;
d) as a soil additive for dust reduction in riding arenas, in animal stalls for binding of animal excrement and unpleasant odors or as a binder in green surfacing of roadsides, slopes, paths and squares, and roof greening, or as an extinguishant additive in firefighting;
e) for controlled release of aqueous liquids, especially water and aqueous solutions, dispersions and emulsions;
f) for production of compostable or dissolvable flower pots or plant pots.

## Revendications

1. Procédé pour la préparation de polymères qui conviennent pour absorber et accumuler des liquides aqueux, comprenant les étapes suivantes :
i. polymérisation radicalaire avec réticulation d'une composition de monomères M qui comprend
a) au moins un monomère A, qui est choisi parmi les acides C₃-C₈-monocarboxyliques éthyléniquement monoinsaturés, leurs mélanges et des mélanges d'au moins un acide C₃-C₈-monocarboxylique éthyléniquement monoinsaturé avec un ou plusieurs acides C₄-C₈-dicarboxyliques éthyléniquement monoinsaturés,
b) le cas échéant un ou plusieurs comonomères B, différents des monomères A, qui présentent une double liaison éthylénique, et
c) 0,05 à 10% en poids, par rapport à la quantité totale des monomères A et B, d'au moins un réticulant C
en présence d'au moins un matériau cellulosique S finement divisé, sous forme de particules, qui contient de la lignine liée, dans un liquide aqueux, le rapport pondéral de la composition de monomères M à la substance S se situant dans la plage de 9:1 à 1:9 ; et
ii. neutralisation au moins partielle des groupes acides dans le polymère obtenu dans l'étape i. ;
la polymérisation et/ou la neutralisation étant réalisée(s) en présence d'urée et au moins 90% en poids des particules du matériau cellulosique sous forme de particules présentant des dimensions dans la plage de 1 µm à < 500 µm, déterminées par analyse par tamisage.

2. Procédé selon la revendication 1, le polymère obtenu dans l'étape i. étant traité avec de l'urée avant ou pendant la neutralisation ou l'hydrolyse dans l'étape ii.

3. Procédé selon l'une quelconque des revendications précédentes, la quantité totale d'urée étant de 1 à 20% en poids, par rapport à la quantité totale de composition monomère M, de substance S et de liquide aqueux.

4. Procédé selon la revendication 1, le matériau cellulosique étant choisi, à raison d'au moins 50% en poids, par rapport à la quantité totale de substance S, parmi la poussière de chanvre, la poussière de lin, la farine de sciure, la paille broyée, la farine de noyau d'olive, la farine d'écorce d'arbre, le refus grossier de la production de cellulose, les épluchures de betterave sucrière, les déchets de canne à sucre, les balles de riz, les balles de céréales ainsi que le produit broyé de fibres de chanvre, de lin, de roseau de Chine, de coco, de kénaf et de bois.

5. Procédé selon l'une quelconque des revendications précédentes, au moins 90% en poids des particules du matériau cellulosique sous forme de particules présentant des dimensions dans la plage de 5 µm à < 300 µm, déterminées par analyse par tamisage.

6. Procédé selon l'une quelconque des revendications précédentes, les monomères A représentant au moins 50% en poids par rapport à la quantité totale de monomères dans la composition de monomères et comprenant en particulier au moins 50% en poids, par rapport à la quantité totale des monomères A, d'acide acrylique.

7. Procédé selon l'une quelconque des revendications précédentes, le réticulant C étant choisi parmi les monomères éthyléniquement insaturés, qui présentent au moins 2 doubles liaisons éthyléniquement insaturées.

8. Procédé selon l'une quelconque des revendications précédentes, la polymérisation étant réalisée sous une atmosphère contenant de l'oxygène, en particulier sous air, de préférence sous pression atmosphérique.

9. Procédé selon l'une quelconque des revendications précédentes, une viscosité de la charge réactionnelle, déterminée selon la norme DIN EN 2555-2000 au moyen d'un viscosimètre de Brookfield à 23°C à un gradient de cisaillement < 10 sec⁻¹, étant réglée au début de la polymérisation dans une plage de 10 à 1000 mPa.s.

10. Procédé selon l'une quelconque des revendications précédentes, la polymérisation étant réalisée à un pH inférieur à 6.

11. Procédé selon l'une quelconque des revendications précédentes, le polymère étant séparé du liquide aqueux après la neutralisation et séché.

12. Polymère approprié pour absorber et accumuler des liquides aqueux, pouvant être obtenu par un procédé selon l'une quelconque des revendications précédentes.

13. Polymère selon la revendication 12, qui présente une capacité d'absorption d'eau de 50 à 800 g par g de polymère, calculé sous forme de substance séchée au four, en particulier de 200 à 800 g par g de polymère, calculé sous forme de substance séchée au four et en particulier de 300 à 600 g par g de polymère, calculé sous forme de substance séchée au four.

14. Polymère selon la revendication 12 ou 13 sous forme d'un granulat pouvant s'écouler.

15. Utilisation de polymères selon la revendication 12, 13 ou 14 pour un des buts suivants :
a) pour améliorer les qualités de sol de terreau, de terre du jardin, de terre de pâturage, de terre de pelouse, de terre de forêt ou de terre cultivable ainsi que pour la préparation de sols de culture et pour la reculture de surfaces désertifiées ;
b) pour retenir et accumuler l'humidité dans des surfaces de culture pour plantes de cultures ;
c) pour l'amélioration en tant que substance support, d'agents d'amélioration de la structure du sol, qui aèrent le sol, de substances biologiquement actives, de substances actives telles que les agents de phytoprotection, les minéraux, les engrais, en particulier pour la libération contrôlée de substances actives, de minéraux et d'engrais ;
d) comme additif de sol pour la diminution des poussières dans des manèges, dans les étables pour la fixation d'excréments d'animaux et d'odeurs désagréables ou comme liant lors de plantations d'abords de routes, de coteaux, de chemins et de terrains et pour les toitures végétales ou comme additif d'agent extincteur lors de la lutte contre le feu ;
e) pour la libération contrôlée de liquides aqueux, en particulier d'eau et de solutions, de dispersions et d'émulsions aqueuses ;
f) pour la préparation de pots dégradables ou solubles pour fleurs ou plantes.
